(19) Europäisches Patentamt
European Patent Office
Office européen des brevets

(11) **EP 2 206 305 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **08802822.0**

(22) Anmeldetag: **08.10.2008**

(51) Int Cl.:
***H04L 27/26*** (2006.01)

(86) Internationale Anmeldenummer:
**PCT/EP2008/008483**

(87) Internationale Veröffentlichungsnummer:
**WO 2009/059672 (14.05.2009 Gazette 2009/20)**

(54) **SYNCHRONISIERUNG VON EMPFANGSSYMBOLEN BEI OFDM**

SYNCHRONIZATION OF RECEIVED SYMBOLS FOR OFDM

SYNCHRONISATION DE SYMBOLES RECUS POUR OFDM

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.11.2007 DE 102007053402**

(43) Veröffentlichungstag der Anmeldung:
**14.07.2010 Patentblatt 2010/28**

(73) Patentinhaber: **Rohde & Schwarz GmbH & Co. KG 81671 München (DE)**

(72) Erfinder:
• **BALZ, Christoph**
**81543 München (DE)**
• **GALDA, Dirk**
**85540 Haar (DE)**
• **SCHMIDT, Kurt**
**85567 Grafing (DE)**

(74) Vertreter: **Körfer, Thomas**
**Mitscherlich & Partner**
**Patent- und Rechtsanwälte**
**Sonnenstrasse 33**
**80331 München (DE)**

(56) Entgegenhaltungen:
**EP-A- 1 424 821          EP-A- 1 575 207**
**US-A1- 2006 245 349**

**Beschreibung**

Die Erfindung betrifft ein Verfahren und eine Vorrichtung zur Synchronisierung von Empfangssymbolen bei OFDM (Orthogonal Frequency Domain Multiplex) Übertragungsverfahren.

Für den Empfang eines OFDM-Signals ist die Ausrichtung des FFT (Fast Fourier Transform)-Fensters der FourierTransformation auf den Empfangsdatenstrom ("Symbolsynchronisation") von entscheidender Bedeutung. Ziel der Symbolsynchronisation ist es, eine Position des FFT-Fensters zu bestimmen, die für alle Ausbreitungspfade innerhalb der OFDM-Symboldauer liegen. Die OFDM-Symboldauer besteht dabei aus der Nutzsymboldauer und dem Schutzintervall.

Die Bestimmung der Position des FFT-Fensters erfolgt üblicherweise durch die Auswertung des empfangenen Zeitsignals mittels Korrelationstechniken. Dabei wird die Kenntnis über die in einem OFDM-Zeitignal in Form eines wiederholten Signalabschnittes enthaltene Redundanz ausgenutzt. Die enthaltene Redundanz kann entweder implizit durch Anfügen des Schutzintervalls oder explizit durch Einfügen einer speziellen Signalsequenz als Prä-, Mid- oder Postambel vorhanden sein. Die Bestimmung der FFT-Fensterposition durch ein Korrelationsverfahren ist für einen Kanal ohne Mehrwegeausbreitung (AWGN-Kanal) optimal. Treten hingegen mehrere Ausbreitungspfade entweder auf Grund der physikalischen Eigenschaften des Funkkanals oder durch die gewollte Überlagerung mehrerer identischer Sendesignale in einem Gleichwellennetz (Single Frequency Network) auf, so wird die Position des FFT-Fensters gelegentlich so gewählt, dass nicht alle Anteile der Kanalimpulsantwort im Schutzintervall enthalten sind.

Eine falsche Positionierung des Schutzintervalls hat zwei wesentliche Auswirkungen auf die Qualität des empfangenen OFDM Signals:

Zum einen verursachen Anteile der Impulsantwort außerhalb des Schutzintervalls Interferenzen zwischen den Modulationssymbolen eines Unterträgers aufeinander folgender OFDM-Symbole (Inter-Symbol-Interferenzen) und zwischen den Modulationssymbolen benachbarter Unterträger eines OFDM-Symbols (Inter-Carrier-Interferenzen). Die Interferenzen überlagern sich additiv dem Kanalrauschen und haben eine Degradation des Störabstands und damit einen Anstieg der Bitfehlerrate zur Folge. Die Interferenzleistung nimmt linear mit der Leistung des Signalanteils außerhalb des Schutzintervalls und quadratisch mit dem zeitlichen Abstand der Signalanteile zu den Rändern des Schutzintervalls zu.

Zum Anderen erfolgt bei einem Empfänger mit kohärenter Demodulation und einer auf Pilotsymbolen basierenden Kanalschätzung durch das Frequenzinterpolationsfilter in der Regel eine Unterdrückung von Signalanteilen außerhalb des Schutzintervalls. Hieraus resultiert bei falscher Positionierung des Schutzintervalls eine fehlerhafte Schätzung der Kanalübertragungsfunktion und damit eine falsche Entzerrung der Empfangssymbole, was wiederum eine Degradation der Bitfehlerrate zur Folge hat.

Diese Probleme löst die GB 2 390 517 A durch einen zweistufigen Synchronisierer nur teilweise. So wird in einer ersten Stufe eine grobe Schätzung des korrekten Synchronisationszeitpunkts bestimmt. In einer zweiten Stufe wird eine Kanalimpulsantwort anhand von bekannten Pilotträgern ermittelt. Aus der ermittelten Kanalimpulsantwort wird eine Funktion gebildet, die ein Maß für den an dem Empfangssymbol "angerichteten Schaden" gegenüber dem Sendesymbol durch eine bestimmte zur Decodierung eingesetzte FFT-Fensterposition angibt. Durch Minimierung dieser Funktion wird der optimale Synchronisationszeitpunkt bestimmt.

Die Ermittlung dieser Funktion ist jedoch mit einem großen Rechenaufwand verbunden. Weiterhin kann alleine mit dieser Funktion nicht immer der korrekte Synchronisationszeitpunkt eindeutig bestimmt werden.

Die Druckschrift EP 1 424 821 A2 zeigt ein Verfahren und eine Vorrichtung zur Synchronisierung von MIMO OFDM und anderen schnurlosen Kommunikationssystemen. Dabei wird die Leistung eines Satzes von Kanalimpulsantworten aufsummiert und über ein geeignetes Zeitfenster integriert. Der Zeitpunkt des maximalen Integrals wird dabei als Synchronisationszeitpunkt bestimmt.

Der Erfindung liegt die Aufgabe zu Grunde, für Kanäle mit Mehrfachempfang des Signals, z.B. durch Mehrwegeausbreitung eines Sendesignals, oder durch Mehrfachaussendung in einem Gleichwellennetz, ein Verfahren und eine Vorrichtung zur genauen und aufwandsarmen Synchronisation zu schaffen.

Die Aufgabe wird erfindungsgemäß für das Verfahren durch die Merkmale des unabhängigen Anspruchs 1 und durch die Merkmale des unabhängigen Anspruchs 11 für die Vorrichtung gelöst. Vorteilhafte Weiterbildungen sind Gegenstand der hierauf rückbezogenen Unteransprüche.

Zur Synchronisierung von Empfangssignalen bei orthogonalen Frequenz-Multiplex-Übertragungsverfahren ermittelt eine Kanalübertragungsfunktions-Bestimmungs-Einrichtung die Kanalübertragungsfunktion aus dem Empfangssignal mehrerer übertragener bekannter Pilotsymbole. Eine Kanalimpulsantwort-Bestimmungs-Einrichtung ermittelt hieraus die Kanalimpulsantwort. Dabei enthält ein Sendesignal zumindest einen Senderahmen und jeder Senderahmen zumindest ein Schutzintervall. Die Kanalimpulsantwort des Übertragungskanals enthält dabei mehrere zeitlich versetzte Komponenten. Jeder mögliche Synchronisationszeitpunkt entspricht dabei genau einer Position des Schutzintervalls gegenüber der Kanalimpulsantwort. Die Metrik-Bestimmungs-Einrichtung bildet für sämtliche möglichen Synchronisationszeitpunkte eine Metrik, die von der innerhalb des jeweiligen Schutzintervalls liegenden Leistung der Kanalimpulsantwort abhängig ist. Die Metrik-Maximierungs-Einrichtung bestimmt den korrekten Synchronisationszeitpunkt des Empfangssignals durch Maximierung der Metrik. So ist eine zuverlässige sehr genaue Synchronisation des Empfangssignals möglich.

Vorteilhafterweise ist eine Grobsynchronisierungs-Einrichtung, welche einen Grobschätzwert des korrekten Synchronisationszeitpunkts ermittelt, der Kanalübertragungsfunktions- Bestimmungs- Einrichtung vorgeschaltet. Die Genauigkeit wird dadurch weiter erhöht.

Das Übertragungsverfahren kann für jeden digitalen Rundfunkstandard oder digitalen Fernsehstandard, insbesondere DVB-T oder DAB angewandt werden. Signale des sehr verbreiteten Übertragungsstandards können so sehr genau synchronisiert werden.

Das Empfangssignal enthält bevorzugt das über den Übertragungskanal übertragene ursprüngliche Sendesignal und Echos des Sendesignals. Das Empfangssignal enthält bevorzugt mehrere identische, zeitversetzte Sendesignale und Echos mehrerer identischer zeitversetzter Sendesignale. Auch bei mehreren Sendern, die das gleiche Signal ausstrahlen, wie z.B. in Gleichwellennetzen ist eine Synchronisation möglich.

Vorteilhafterweise bestimmt die Metrik-Maximierungs-Einrichtung die Maxima der Metrik durch Maximumssuche über alle Metrikwerte.

Eine Schwellwert-Bildungs-Einrichtung reduziert bevorzugt die Anzahl der in die Berechnung der Metrik eingehenden Komponenten der Kanalimpulsantwort durch Vergleich der Leistungen der Komponenten der Kanalimpulsantwort mit einem Schwellwert.

Vorteilhafterweise liegt der Schwellwert oberhalb einer unteren Schwellwertgrenze und unterhalb einer oberen Schwellwertgrenze. Die untere Schwellwertgrenze ist bevorzugt von dem mittleren Rauschpegel abhängig. Die obere Schwellwertgrenze ist bevorzugt von dem Maximum der Leistungen der Kanalimpulsantwort abhängig. So wird einerseits der Schwellwert mit nur sehr geringem Aufwand bestimmt. Andererseits wird durch diese Festlegung des Schwellwerts eine sichere Detektion der Maxima der Metrik erreicht.

Vorteilhafterweise bilden mehrere nebeneinander Leistungen der Kanalimpulsantwort, welche den Schwellwert überschreiten, eine Maximumsregion. Die Schwellwert-Bildungs-Einrichtung betrachtet bevorzugt nur den höchsten Wert der Leistung der Kanalimpulsantwort in einer Maximumsregion als Maximum der Leistung der Kanalimpulsantwort. So werden durch verschiedene Störungen verbreiterte Maxima der Metrik auf diskrete Metrik-Maxima zurückgeführt. Damit wird die Genauigkeit der Synchronisation erhöht.

Die Metrik-Bestimmungs-Einrichtung mittelt bei der Bildung der Metrik bevorzugt über mehrere zeitlich versetzte Kanalimpulsantworten. So ist das Ergebnis der Synchronisation nicht von kurzzeitigen Fluktuationen der Kanalimpulsantwort abhängig und die Sicherheit der Synchronisation wird erhöht.

Vorteilhafterweise bewirkt eine Unterabtastung der Kanalübertragunsfunktion im Frequenzbereich eine periodische Wiederholung der Kanalimpulsantwort im Zeitbereich. Eine periodische Wiederholung der Kanalimpulsantwort im Zeitbereich bewirkt bevorzugt mehrere Positionen des Schutzintervalls mit identischer Metrik. Vorzugsweise entspricht lediglich eine der mehreren Positionen des Schutzintervalls mit identischer Metrik dem korrekten Synchronisationszeitpunkt. Nach der Metrik-Maximierungs-Einrichtung ist bevorzugt eine Mehrdeutigkeits-Auflösungs-Einrichtung angeordnet. Die Mehrdeutigkeits-Auflösungs-Einrichtung betrachtet bevorzugt jede der mehreren Positionen des Schutzintervalls mit identischer Metrik nacheinander als Hypothese des korrekten Synchronisationszeitpunkts. Die Mehrdeutigkeits-Auflösungs-Einrichtung bestimmt bevorzugt für jede Hypothese des korrekten Synchronisationszeitpunkts das Signal-Rausch-Verhältnis übertragener bekannter Pilot-Symbole und ermittelt den korrekten Synchronisationszeitpunkt durch Maximierung dieses Signal-Rausch-Verhältnisses. So wird ein falscher Synchronisationszeitpunkt auch bei Vorliegen einer Mehrdeutigkeit der Metrik ausgeschlossen.

Die Kanalübertragunsfunktion wird bevorzugt um einen bestimmten Faktor unterabgetastet. Vorteilhafterweise ist der Faktor das Verhältnis der Anzahl der Senderahmen ohne bekanntes Pilotsymbol zu der Anzahl der Senderahmen mit bekanntem Pilotsymbol.

Vorteilhafterweise bestimmt die Mehrdeutigkeits-Auflösungs-Einrichtung die den mehreren Hypothesen des korrekten Synchronisationszeitpunkts zugeordneten Signal-Rausch-Verhältnisse nacheinander. Dabei wird bevorzugt zuerst das der Hypothese größten zeitlichen Abstands von dem Grobschätzwert des korrekten Synchronisationszeitpunkts zugeordnete Signal-Rausch-Verhältnis ermittelt. Vorteilhafterweise ermittelt die Mehrdeutigkeits-Auflösungs-Einrichtung die den Hypothesen zugeordneten Signal-Rausch-Verhältnisse in der Reihenfolge sinkenden Abstands von dem Grobschätzwert des korrekten Synchronisationszeitpunkts. So wird die für die Mehrdeutigkeits-Auflösung benötigte Zeit reduziert, da der Synchronisationszeitpunkt mit geringstem Abstand zu dem Grobschätzwert des Synchronisationszeitpunkts gleichzeitig der wahrscheinlichste Synchronisationszeitpunkt ist. Da stets alle möglichen Synchronisationszeitpunkte überprüft werden und so wahrscheinlich von dem letzten Synchronisationszeitpunkt nicht erneut gewechselt werden muss, kann in diesem Fall ein Wechsel des Synchronisationszeitpunkts eingespart werden.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:

Fig. 1   mehrere beispielhafte Übertragungswege von mehreren Sendern zu einem Empfänger;

Fig. 2   eine erste beispielhafte Kanalimpulsantwort;

Fig. 3   einen Teil eines beispielhaften Senderahmens;

Fig. 4    die Auswirkung von der Übertragung des beispielhaften Teils eines Senderahmens über einen Kanal mit der beispielhaften Impulsantwort;

Fig. 5    mögliche Schutzintervallpositionen aufgetragen über einer zweiten beispielhaften Kanalimpulsantwort;

Fig. 6    ein Blockschaltbild eines Ausführungsbeispiels der erfindungsgemäßen Vorrichtung;

Fig. 7    ein Blockschaltbild eines Teils eines Ausführungsbeispiels der erfindungsgemäßen Vorrichtung;

Fig. 8    die Kompensation der Verschiebung des FFT-Fensters zwischen zwei Schritten der Mittelung;

Fig. 9    die Bildung des Schwellwerts anhand einer ersten beispielhaften Verteilung der Leistungen der Kanalimpulsantwortkomponenten;

Fig. 10    die Handhabung von Maximumsbereichen anhand einer zweiten beispielhaften Verteilung der Leistungen der Kanalimpulsantwortkomponenten;

Fig. 11    den Aufbau einer beispielhaften OFDM Übertragung;

Fig. 12    eine zyklische Wiederholung der durch Schwellwertbildung reduzierten Verteilung der Leistung einer beispielhaften Kanalimpulsantwort im Zeitbereich;

Fig. 13    die maximale mehrdeutige Verschiebung des Schutzintervalls in einem beispielhaften Übertragungssystem;

Fig. 14    die resultierenden Metrikwerte an sämtlichen Schutzintervallpositionen anhand der durch Schwellwertbildung reduzierten Verteilung der Leistung einer beispielhaften Kanalimpulsantwort;

Fig. 15    die identischen Metrikwerte, ausgelöst durch zyklische Wiederholung anhand des Beispiels aus Fig. 14, und

Fig. 16    die Auflösung von Mehrdeutigkeiten anhand des Beispiels aus Fig. 15.

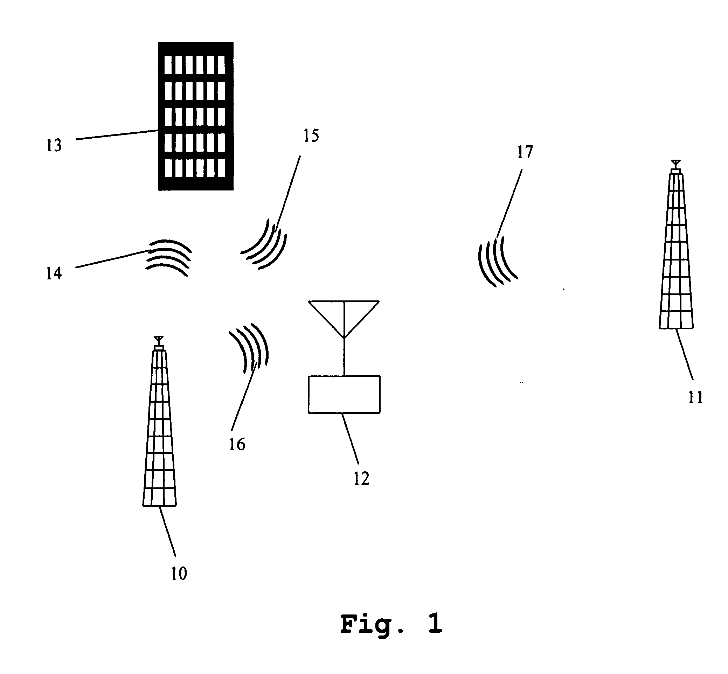

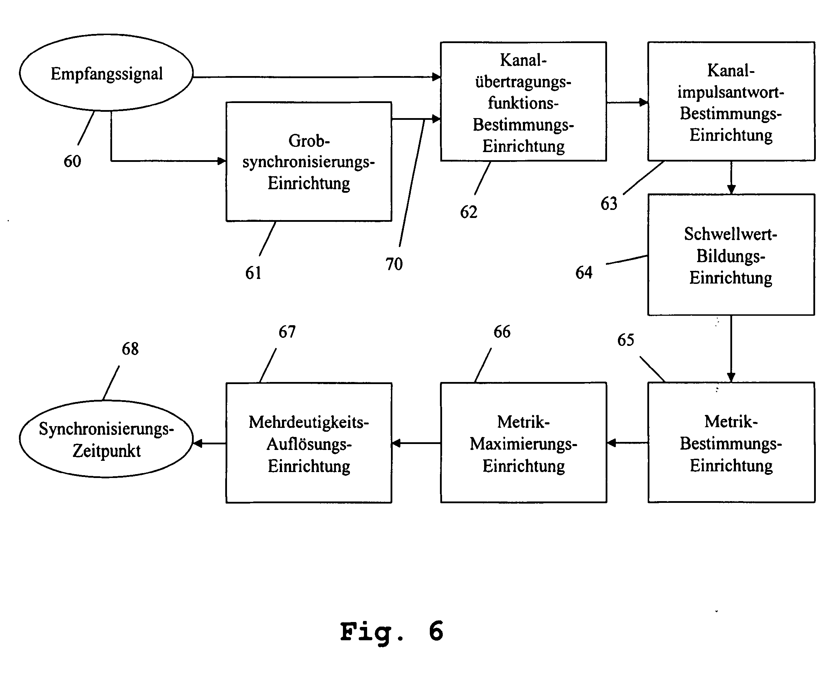

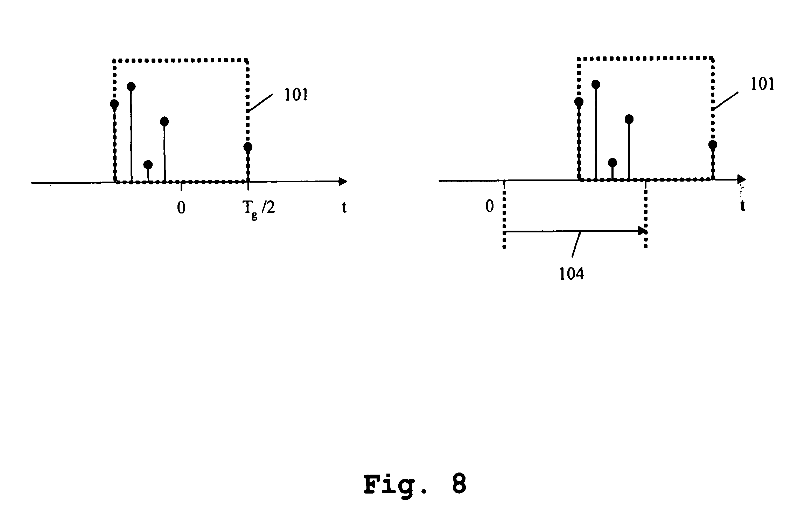

Zunächst wird anhand der Fig. 1 - 5 der Aufbau und die Funktionsweise einer beispielhaften Kommunikationseinrichtung erläutert. Mittels Fig. 6 - 7 wird der Aufbau und die Funktionsweise eines Ausführungsbeispiels der erfindungsgemäßen Vorrichtung veranschaulicht. Anhand der Fig. 8 - 16 wird die Funktionsweise des erfindungsgemäßen Verfahrens anhand einiger beispielhafter Signale dargestellt. Identische Elemente wurden in ähnlichen Abbildungen zum Teil nicht wiederholt dargestellt und beschrieben.

Fig. 1 zeigt mehrere beispielhafte Übertragungswege von mehreren Sendern zu einem Empfänger. Ein Sender 10 sendet über einen Ausbreitungspfad 16 ein Signal an einen Empfänger 12. Das Signal wird ebenfalls über den Ausbreitungspfad 14 abgestrahlt. Es wird an dem Hindernis 13 reflektiert und gelangt über den weiteren Ausbreitungspfad 15 ebenfalls zu dem Empfänger 12. Von einem weiteren, sehr weit entfernt positionierten Sender 11 wird zum gleichen Zeitpunkt ein identisches Signal abgestrahlt. Dieses Signal gelangt über den Ausbreitungspfad 17 ebenfalls zu dem Empfänger 12. Obwohl die Signale von den Sendern 10, 11 zu demselben Zeitpunkt abgestrahlt wurden, erreichen sie den Empfänger 12 zeitversetzt. Zusätzlich zu den beiden direkten Signalen trifft eine zusätzliche Echokomponente des Signals des Senders 10 zeitversetzt bei dem Empfänger 12 ein. Dieser Fall tritt häufig in so genannten Gleichwellennetzen auf. Weit verbreitete Gleichwellennetze sind digitaler Fernseh-Rundfunk (Video Broadcast), zum Beispiel DVB-T, aber auch digitaler Rundfunk (Audio Broadcast), zum Beispiel DAB.

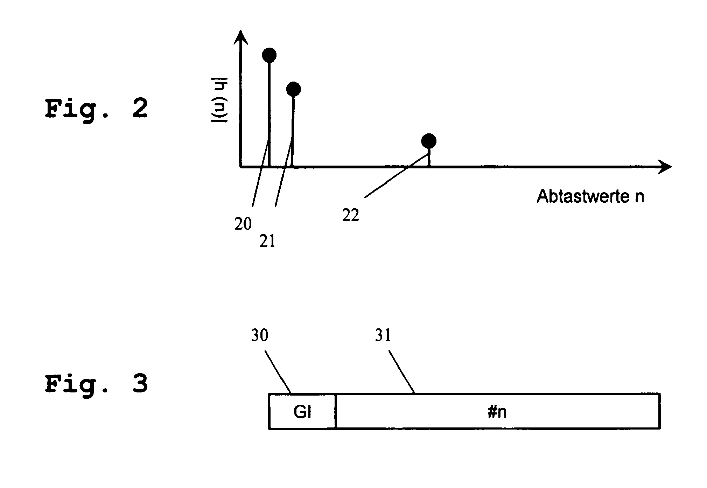

In Fig. 2 wird eine erste beispielhafte Kanalimpulsantwort aus Sicht des Empfängers 12 aus dem vorangehenden Beispiel dargestellt. Die diskrete Signalkomponente 20 entspricht dabei dem Signal über den Übertragungsweg 16. Die weitere diskrete Signalkomponente 21 entspricht dem reflektierten Signal über die Übertragungswege 14 und 15. Diese Signalkomponente 21 ist bereits gegenüber der ersten Signalkomponente 20 zeitlich versetzt und abgeschwächt. Der zeitliche Versatz und die Abschwächung sind durch den längeren Übertragungsweg und die Reflexion begründet. Die weitere diskrete Signalkomponente 22 entspricht dem Signal, welches von dem weit entfernten Sender 11 über den Übertragungsweg 17 gesendet wird. Aufgrund der großen Entfernung ergibt sich eine sehr lange Signallaufzeit und eine starke Abschwächung des Signals.

Fig. 3 zeigt einen Teil eines beispielhaften Senderahmens. Ein Senderahmen besteht aus Schutzintervallen 30 und Nutzsignalanteilen 31. Dabei befinden sich die Schutzintervalle 30 zeitlich vor, hinter oder innerhalb der Nutzsignalanteile 31, und wiederholen einen Teil von diesen. So beträgt die Länge des Schutzintervalls 30 im beispielhaften Fall von DVB-T ein Viertel der gemeinsamen Länge des zugehörigen Nutzsignalanteils 31 und des Schutzintervalls 30, also einem Drittel der Länge des Nutzsignalanteils 31.

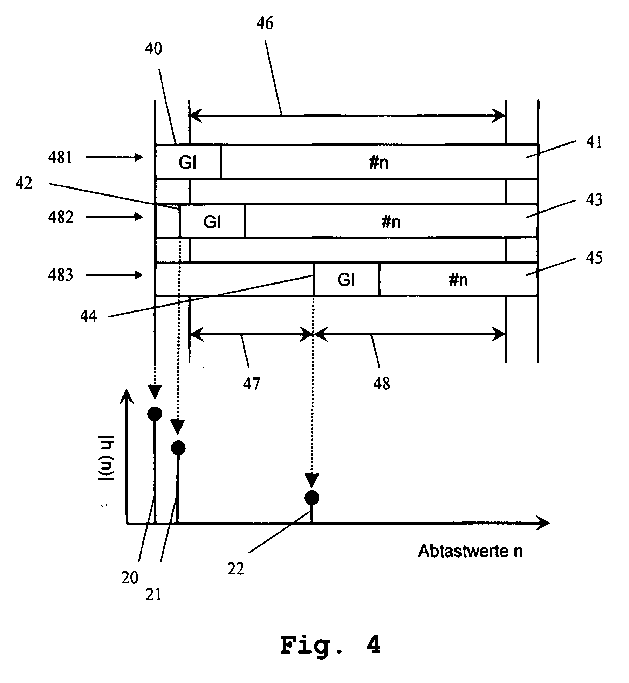

In Fig. 4 wird die Auswirkung der Übertragung des beispielhaften Teils eines Senderahmens über einen Kanal mit der beispielhaften Impulsantwort aus der vorangegangenen Fig. 3 dargestellt. Das zum Empfang des Signals notwendige FFT-Fenster 46 sei wie dargestellt gegenüber der Impulsantwort des Kanals positioniert. Die diskreten Signalanteile 20, 21 und 22 entsprechen dabei den verschiedenen Übertragungspfaden 481, 482, 483 und geben jeweils den zeitlichen Start des Schutzintervalls 40, 42, 44 vor. Der Anteil 47 des FFT-Fensters 46 ist dabei der Anteil an Intersymbolinterferenz, der in dem FFT-Fenster 46 enthalten ist. Der Anteil 48 besteht aus Nutzinformationen.

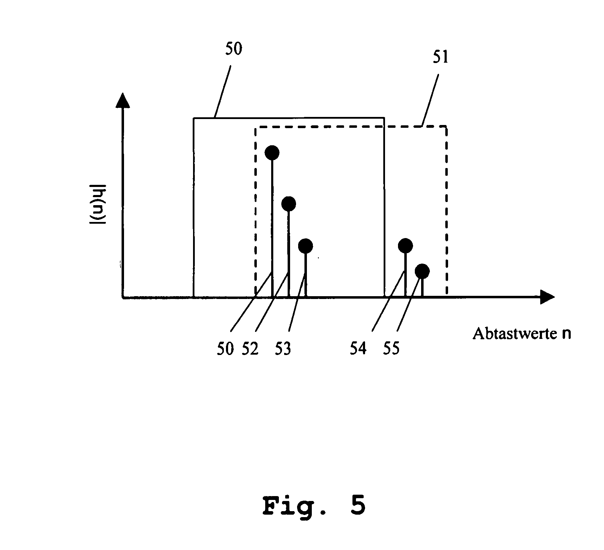

Fig. 5 zeigt mögliche Schutzintervallpositionen aufgetragen über einer zweiten beispielhaften Kanalimpulsantwort. Der Synchronisationszeitpunkt ist optimal erreicht, wenn der Anteil der Leistung der Kanalimpulsantwort, welcher bei gegebener Position des FFT-Fensters innerhalb des Schutzintervalls zu liegen kommt, maximal ist. Bei den gegebenen diskreten Anteilen der Kanalimpulsantwort 50, 52, 53, 54, 55 ist die Position 50 des Schutzintervalls suboptimal, während die Position 51 den Synchronisationszeitpunkt optimiert.

In Fig. 6 wird ein Blockschaltbild eines Ausführungsbeispiels der erfindungsgemäßen Vorrichtung dargestellt. Eine Grob-Synchronisierungs-Einrichtung 61 ist mit einer Kanalübertragungsfunktions-Bestimmungs-Einrichtung 62 verbunden. Die Kanalübertragungsfunktions-Bestimmungs-Einrichtung 62 ist mit einer Kanalimpulsantwort-Bestimmungs-Einrichtung 63 verbunden. Die Kanalimpulsantwort-Bestimmungs-Einrichtung 63 ist dabei mit Schwellwert-Bestimmungs-Einrichtung 64 verbunden. Die Schwellwert-Bestimmungs-Einrichtung 64 ist mit einer Metrik-Bestimmungs-Einrichtung 65 verbunden. Die Metrik-Bestimmungs-Einrichtung 65 ist mit einer Metrik-Maximierungs-Einrichtung 66 verbunden. Die Metrik-Maximierungs-Einrichtung 66 ist mit einer Mehrdeutigkeits-Auflösungs-Einrichtung 67 verbunden. Ein Empfangsignal 60 wird der Grob-Synchronisierungs-Einrichtung 61 zugeführt.

Die Grob-Synchronisierungs-Einrichtung 61 bestimmt einen groben Schätzwert des Synchronisationszeitpunkts, z.B. mittels Korrelationsverfahren, und übermittelt diesen an die Kanalübertragungsfunktions-Bestimmungs-Einrichtung 62. Das Empfangsignal 60 wird ebenfalls der Kanalübertragungsfunktions-Bestimmungs-Einrichtung 62 zugeführt. Aus einer Mehrzahl von mit dem Empfangsignal 60 übertragenen bekannten Pilotsymbolen wird von der Kanalübertragungsfunktions-Bestimmungs-Einrichtung 62 die Kanalübertragungsfunktion bestimmt. Die Kanalübertragungsfunktion wird an die Kanalimpulsantwort-Bestimmungs-Einrichtung 63 übermittelt.

Durch eine Transformation in dem Zeitbereich wird die Kanalimpulsantwort bestimmt. Diese wird an die Schwellwert-Bestimmungs-Einrichtung 64 übertragen. Die Schwellwert-Bestimmungs-Einrichtung 64 reduziert die Anzahl der weiterzuverarbeitenden Kanalimpulsantwortkomponenten, welche Ausbreitungspfaden des Signals entsprechen, durch Schwellwertbildung der Leistung der Kanalimpulsantwortkomponenten. Die resultierenden verbleibenden Leistungen der Kanalimpulsantwortkomponenten werden an die Metrik-Bestimmungs-Einrichtung 65 übermittelt. Dort wird für alle möglichen Positionen des Schutzintervalls eine Metrik gebildet. Die Metrik ist dabei abhängig von der Leistung der Kanalimpulsantwort, welche in das jeweilige Schutzintervall fällt. Die Metrikwerte werden an die Metrik-Maximierungs-Einrichtung 66 weitergeleitet. Die Metrik-Maximierungs-Einrichtung 66 bestimmt das Maximum der Metrik. Das Maximum der Metrik kennzeichnet den optimalen Synchronisierungszeitpunkt. Falls mehrere identische Metrikwerte auftreten, so werden diese an die Mehrdeutigkeits-Auflösungs-Einrichtung 67 übertragen. Die Mehrdeutigkeits-Auflösungs-Einrichtung 67 bestimmt unter den mehreren identischen maximalen Metrikwerten den tatsächlichen optimalen Synchronisierungszeitpunkt 68.

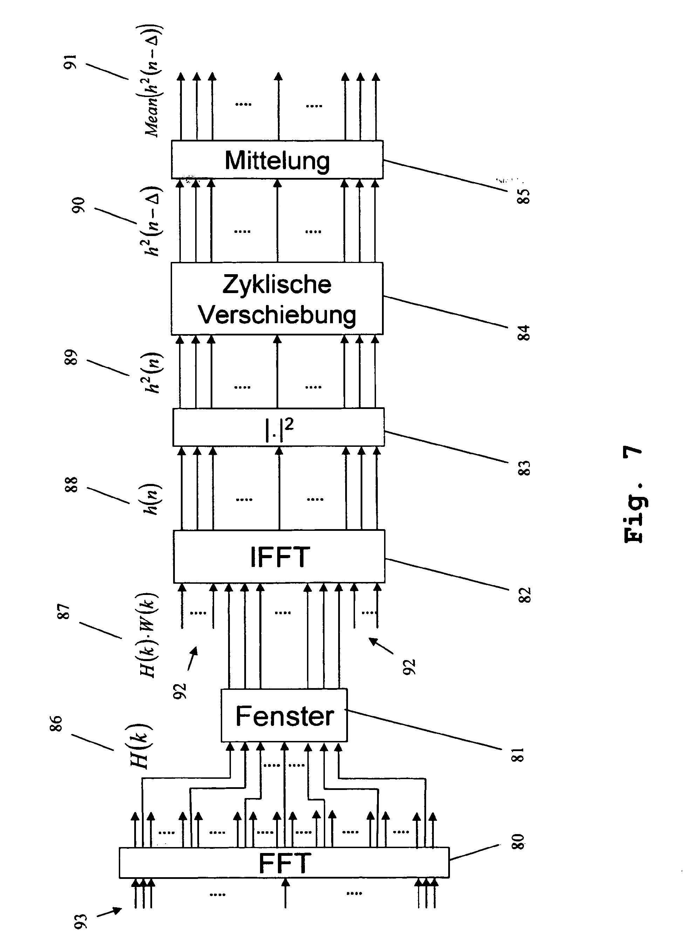

Fig. 7 zeigt ein Blockschaltbild eines Teils eines Ausführungsbeispiels der erfindungsgemäßen Vorrichtung. Das beispielhafte Empfangssignal 93 ist ein OFDM-Signal. Das Empfangssignal 93 im Zeitbereich wird von einer Diskreten-Fourier-Transformations-Einrichtung 80 in den Frequenzbereich transformiert. Dem Signal ist die Kanalübertragungsfunktion 86 aufgeprägt. Aus Unterträgern, welche bekannte Pilotsymbole enthalten, oder aus bereits entschiedenen Nutzdatensymbolen werden die Kanalübertragungsfaktoren und damit die Kanalübertragungsfunktion 86 bestimmt. Da in dieser beispielhaften Übertragung nur jeder dritte Unterträger, zu einem gegebenen Zeitpunkt bekannte Pilotsymbole enthält, werden nur diese Unterträger zur Bestimmung der Kanalübertragungsfunktion 86 ausgewertet.

Um die notwendige Länge für eine Inverse diskrete FourierTransformation (IFFT) zu erzielen, wird das Signal 87 um Unterträger mit dem Wert Null 92 ergänzt. Die Nullbelegung dieser Unterträger entspricht der Bewertung der Kanalübertragungsfunktion 86 mit einem Rechteckfenster. Durch die IFFT geht die Fensterbewertung der Kanalübertragungsfunktion 86 in eine Faltung der Kanalimpulsantwort 88 mit der transformierten Fensterfunktion über. Für den Fall eines Rechteckfensters resultiert hieraus eine si-förmige Verbreiterung der Echopfade der Kanalimpulsantwort 88. Die hierbei entstehenden Nebenzipfel der Echopfade können benachbarte Echopfade der Kanalimpulsantwort 88 überdecken. Zur Verringerung der Nebenzipfel wird deshalb vor Berechnung der IFFT eine Bewertung der belegten Unterträger mit einer Fensterfunktion (z.B. Hamming-Fenster) durchgeführt. Durch diese Fensterung 81 wird der Übergang zwischen belegten Unterträgern und den hinzugefügten, zu Null gesetzten, Unterträgern 92 geglättet.

Die Diskrete-Inverse-Fourier-Transformations-Einrichtung 82 wandelt das Signal 87, ergänzt um die zusätzlichen Unterträger mit Wert Null 92, in den Zeitbereich. Das so entstehende Signal 88 ist die Kanalimpulsantwort 88 des Übertragungskanals. Eine Leistungs-Bestimmungs-Einrichtung 83 multipliziert jeden Abtastwert des Signals 88 mit sich selbst und gibt die Leistung 89 der Kanalimpulsantwort 88 aus.

Werden alle $N_U$ Nutzträger der OFDM-Übertragung zur Berechnung der Kanalimpulsantwort herangezogen, so entspricht die Transformationslänge $N_H$ zur Berechnung der Kanalimpulslänge der Anzahl der OFDM Unterträger $N_C$. Die Abtastperiode $T_h$ der sich ergebenden Impulsantwort ist in diesem Fall mit der Abtastperiode des OFDM Eingangssignals $T_A = 1/f_A$ identisch, wobei $f_A$ die Abtastrate des OFDM-Signals ist. Wird hingegen nur eine geringere Anzahl an Unterträgern verwendet, da z.B. nur an der Position der äquidistant im Abstand $N_P$ entlang der Frequenzachse angeordneten Pilotunterträger die Kanalübertragungsfaktoren bekannt sind, so entspricht die Transformationslänge der nächst größeren Zweierpotenz. Die Abtastperiode der sich ergebenden Kanalimpulsantwort kann in diesem Fall als Quotient aus der relativen Transformationslänge bezogen auf die Unterträgeranzahl und dem Frequenzabstand der berücksichtigten Unterträger in Vielfachen des Unterträgerabstands als

$$T_h = \frac{1}{N_P} \cdot \frac{N_C}{N_h} \, .$$

berechnet werden.

Um zu verhindern, dass für den Fall eines zeitvarianten Übertragungskanals ein laufendes Nachjustieren der FFT-Fensterposition zur Anpassung an die momentane Verteilung der Leistung 89 der Kanalimpulsantwort 88 erfolgt, wird der Synchronisationszeitpunkt basierend auf der Verteilung der mittleren Leistung 91 bestimmt. Es erfolgt also eine inkohärente Mittelung der Leistung 89 der Kanalimpulsantwort 88. Bei hinreichend langer Mittelungsdauer entspricht das Ergebnis der Mittelung dem Verzögerungs-Leistungsdichtespektrum (VLDS) des Kanals. Aufgrund der inkohärenten Überlagerung der Messungen kann keine Rauschbefreiung erreicht werden. Es wird lediglich die Varianz des der Kanalimpulsantwort 88 überlagerter Störsignals reduziert, so dass sich für eine hinreichend große Mittelungsdauer die Überlagerung eines der mittleren Leistung des Störung entsprechen Signals ergibt.

Die Realisierung der Mittelung erfolgt vorzugsweise unabhängig für alle Abtastwerte der Kanalimpulsantwort 88 durch Filterung aufeinander folgender Messwerte. Hierzu wird zunächst die Verschiebung des FFT-Fensters zwischen zwei Schritten der Mittelung durch zyklische Verschiebung 84 der Leistung 89 der Kanalimpulsantwort 88 kompensiert. Anschließend erfolgt die eigentliche Mittelung 85. Das Mittelungsfilter kann dabei z.B. als FIR-Filter oder auch als IIR-Filter realisiert sein. Die Mittelungslänge wird größer als die Kohärenzzeit des Kanals gewählt. Das resultierende Signal 91 entspricht der gemittelten Verteilung der Leistung 89 der Kanalimpulsantwort 88. Dabei entsprechen die in Fig. 7 gezeigten Elemente der Kanalübertragungsfunktions-Bestimmungs-Einrichtung 62 und der Kanalimpulsantwort-Bestimmungs-Einrichtung 63.

In Fig. 8 wird die Kompensation der Verschiebung des FFT-Fensters zwischen zwei Schritten der Mittelung dargestellt. Um die Rückwirkung einer Verschiebung des FFT-Fensters auf die Mittelung aufeinander folgender Kanalimpulsantworten 88 zu vermeiden, muss zuvor die Auswirkung der durchgeführten Fensterverschiebung auf die gemessene Kanalimpulsantwort 88 kompensiert werden. Dies kann entweder vor Berechnung der IFFT durch Multiplikation der Kanalübertragungsfunktion 86 mit einem zur Verschiebung proportionalen linearphasigen Korrekturterm für jeden Unterträger oder nach der IFFT durch Verschieben der berechneten Kanalimpulsantwort 88 erfolgen. Im hier und in Fig. 7 dargestellten Beispiel erfolgt die Korrektur durch Verschieben der berechneten Kanalimpulsantwort 88 nach Bestimmung der Leistung 89 der Kanalimpulsantwort 89. So wird lediglich der Bezugspunkt zur Korrektur um das Intervall 104 verschoben. Die Schutzintervalle 101 selbst, wie auch die Leistung 89 der Impulsantwort 88, bleiben unverändert.

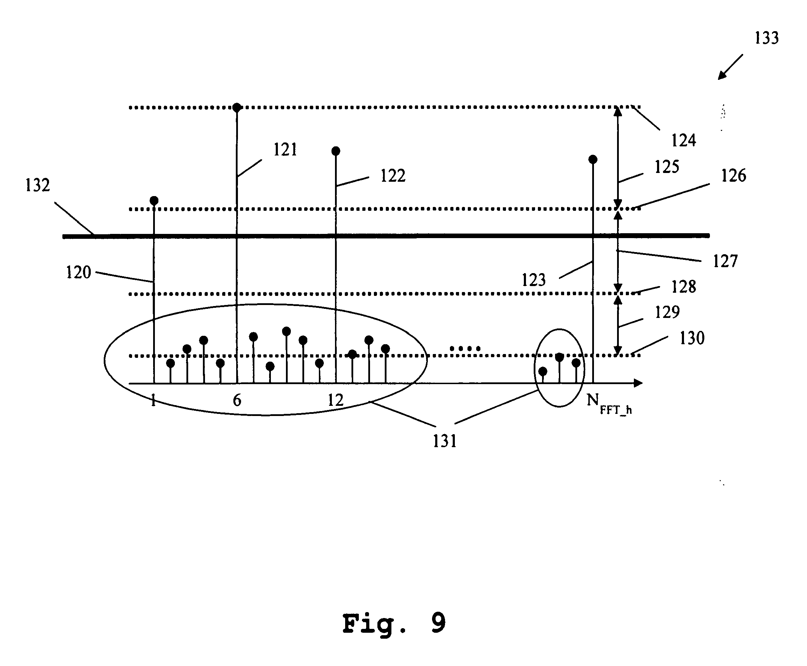

Fig. 9 zeigt die Bildung des Schwellwerts 132 anhand einer ersten beispielhaften Verteilung der Leistungen der Kanalimpulsantwortkomponenten 133. Der Schwellwert 132, anhand dessen die Anzahl der Kanalimpulsantwortkomponenten reduziert wird, wird ausgehend von der Verteilung der Leistungen der Kanalimpulsantwortkomponenten 133 bestimmt. So gibt das Maximum 124, hier bei der Kanalimpulsantwortkomponente 121, eine obere Grenze des zu bestimmenden Schwellwerts 132 vor. Ausgehend von diesem Maximum 124 wird eine obere Schwellwertgrenze 126 festgelegt, welche um ein bestimmtes Intervall 125 unterhalb des Maximums 124 liegt. Ausgehend von dem durchschnittlichen Rauschniveau 130 wird eine untere Grenze 128 des zu bestimmenden Schwellwerts 132 bestimmt. Diese untere Schwellwertgrenze 128 liegt um ein bestimmtes Intervall 129 oberhalb des Rauschniveaus 130. Somit ergibt sich ein Intervall 127, innerhalb dessen der Schwellwert 132 festgelegt wird. Durch die IFFT wird die Signalleistung auf wenigen Abtastwert konzentriert während die Störleistung in der Regel gleichmäßig auf alle Abtastwerte verteilt wird. Hieraus resultiert ein zusätzlicher Störabstandsgewinn.

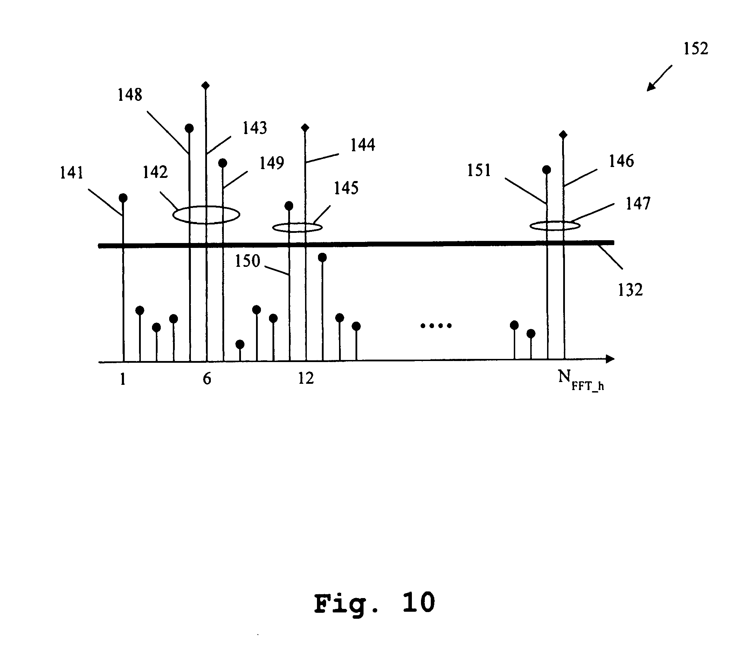

In Fig. 10 wird die Handhabung von Maximumsbereichen 142, 145, 147 anhand einer zweiten beispielhaften Verteilung der Leistungen der Kanalimpulsantwortkomponenten 152 dargestellt. Die Maxima der Verteilung der Leistungen der Kanalimpulsantwortkomponenten 152 sind hier nicht, wie in Fig. 9 dargestellt, eindeutig, d.h. z.B. auf Grund von Verzerrungen sind die Maxima verbreitert. Deshalb genügt eine Schwellwertbildung nicht, um die Maxima zu ermitteln. Überschreiten mehrere benachbarte Leistungen der Kanalimpulsantwortkomponenten 148 und 143 und 149, 150 und 144, 151 und 146 den Schwellwert 132, so werden diese zu Maximabereichen 142, 145, 147 zusammengefasst. Für die Weiterverarbeitung werden lediglich die absoluten Maxima 143, 144, 146 der Maximabereiche 142, 145, 147 als Maxima betrachtet. Damit werden unscharfe Maximabereiche 142, 145, 147 aufgelöst. Die Anzahl der weiter berücksichtigten Kanalimpulsantwortkomponenten wird so deutlich reduziert.

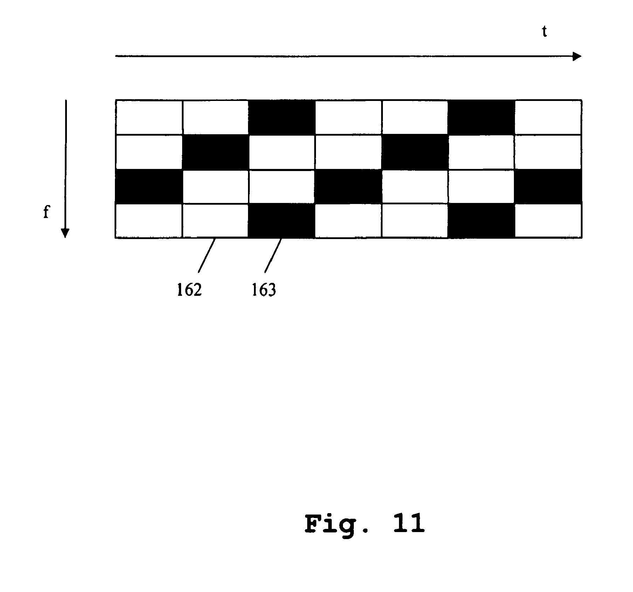

Fig. 11 zeigt den Aufbau einer beispielhaften OFDM Übertragung. Eine Vielzahl von Senderahmen 162, 163 wird von einer Zeit- und einer Frequenz-Achse aufgespannt. Jedem Senderahmen 162, 163 ist dabei ein genauer zeitlicher Bereich und ein genauer Frequenzabschnitt zugeordnet. Die Senderahmen 162 enthalten lediglich Nutzdaten, welche durch Schutzintervalle gesichert sind. Die Senderahmen 163 enthalten weiterhin Pilotsymbole. Diese Pilotsymbole sind mit dem Kommunikationsstandard festgelegt, und bei jeder Übertragung identisch. Die Position der Pilotsymbole innerhalb der Senderahmen 163 ist dabei eindeutig festgelegt. Auch die Position der Senderahmen 163 gegenüber den Senderahmen 162 ist eindeutig festgelegt. Typischerweise sind die Senderahmen 163 gleichmäßig zwischen den Senderahmen 162 verteilt. So enthält beispielsweise bei dem Kommunikationsstandard DVB-T jeder dritte Senderahmen sowohl auf der Zeit-Achse, als auch auf der Frequenz-Achse bekannte Pilotsymbole.

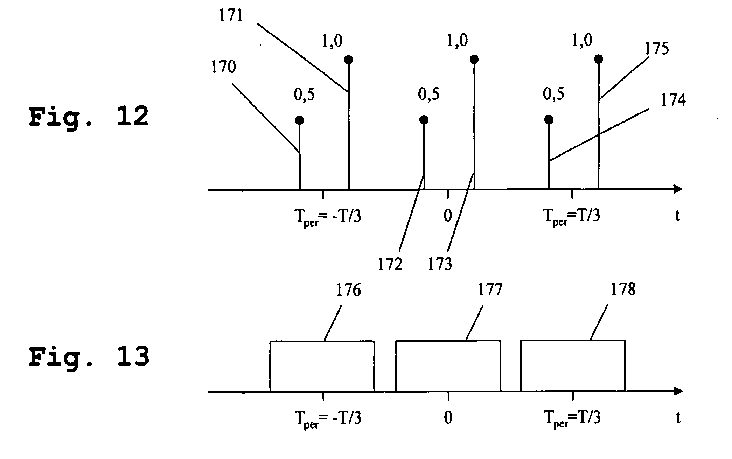

In Fig. 12 wird eine zyklische Wiederholung der durch Schwellwertbildung reduzierten Verteilung der Leistung einer beispielhaften Kanalimpulsantwort im Zeitbereich dargestellt. Wird die Kanalimpulsantwort aus äquidistant entlang der Frequenzachse angeordneten Pilotsymbolen mit einem Abstand von mehr als einem Unterträger berechnet, so reduziert sich der Eindeutigkeitsbereich der Kanalimpulsantwort aufgrund der Unterabtastung der Kanalübertragungsfunktion. Der Suchbereich der Metrik kann in diesem Fall eine Periodenlänge der zyklisch wiederholten Kanalimpulsantwort übersteigen. Dies ist insbesondere für große Schutzintervalllängen der Fall.

In dem in Fig. 11 gezeigten Beispiel sind bekannte Pilotsymbole jeweils nur aus jedem dritten Unterträger bekannt. Damit ergibt sich eine Unterabtastung um den Faktor drei. D.h. eine zyklische Wiederholung der Leistung der Kanalimpulsantwort im Zeitbereich ergibt sich. Die tatsächliche Leistung der Kanalimpulsantwort besteht aus zwei diskreten Signalkomponenten, welche sowohl in ihrem Betrag als auch in ihrem Zeitversatz verschieden sind. Es ergeben sich damit die drei Wiederholungen der Leistung der Kanalimpulsantwort, dargestellt durch die sechs diskreten Anteile der Leistung der Kanalimpulsantwort 170, 171, 172, 173, 174, 175. Wobei jeweils die Komponenten 170 und 171, 172 und 173, 174 und 175 einer zyklischen Wiederholung entstammen. Der Empfänger kann dies jedoch nicht erkennen.

Fig. 13 zeigt die maximale mehrdeutige Verschiebung des Schutzintervalls in einem beispielhaften Übertragungssystem. Bei diesem beispielhaften Kommunikationsstandard ist die Länge des Schutzintervalls auf 1/4 der Gesamtlänge aus Schutzintervall und Nutzsignalanteil festgelegt. Damit ergeben sich die möglichen Positionen des Schutzintervalls über der Kanalimpulsantwort durch die maximal verschobenen Schutzintervalle 176 und 178 und sämtliche dazwischen liegende Schutzintervallpositionen. Mit der Schutzintervallposition 177 ist eine dieser beispielhaften Positionen gezeigt.

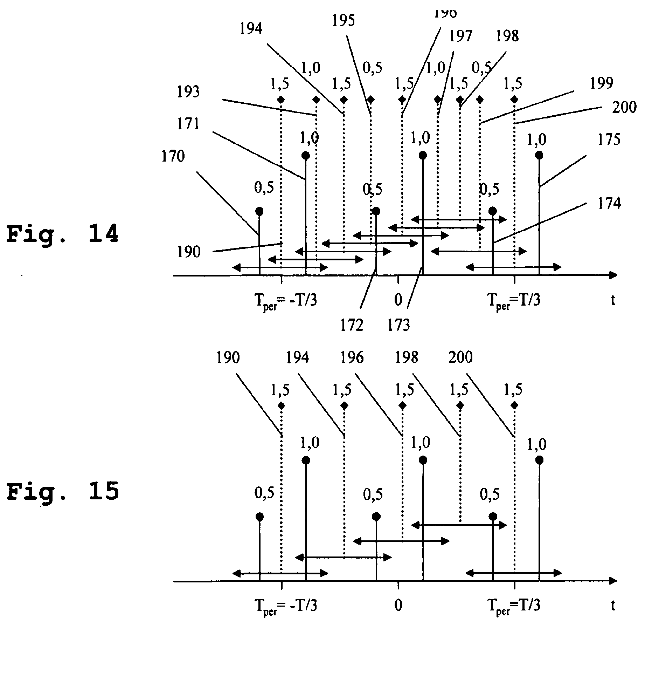

In Fig. 14 werden die resultierenden Metrikwerte an sämtlichen Schutzintervallpositionen anhand der durch Schwellwertbildung reduzierten Verteilung der Leistung der beispielhaften Leistung der Kanalimpulsantwort aus Fig. 12 dargestellt. Die Anteile der Leistung der Kanalimpulsantwort 170, 171, 172, 173, 174, 175 werden durch ein Fenster der Breite eines Schutzintervalls überschritten. Dabei wird an jeder Fensterposition die Metrik an dieser Position bestimmt. So werden die Anteile der Leistung der Kanalimpulsantwort, welche in das Fenster fallen, addiert, um den jeweiligen Metrikwert zu erhalten. So ergibt sich für die erste Fensterposition 190 die Metrik zu 1,5, da die Anteile der Leistung der Kanalimpulsantwort 170 und 171 in das Fenster fallen. Die zweite Metrik 193 wird lediglich durch den einen Anteil der Leistung der Kanalimpulsantwort 171 gebildet und ergibt sich zu 170. Die dritte Metrik 194 ergibt sich erneut zu 1,5, da die Anteile der Leistung der Kanalimpulsantwort 171 und 172 in das Fenster fallen. So ergeben sich für die weiteren Metriken 195, 196, 197, 198, 199 und 200 Metrikwerte im Bereich von 0,5 bis 1,5.

Fig. 15 zeigt die identischen Metrikwerte, ausgelöst durch zyklische Wiederholung anhand des Beispiels aus Fig. 14. Lediglich die Fensterpositionen 190, 194, 196, 198 und 200, welche den maximalen Metrikwert von 1,5 aufweisen, kommen als korrekte Synchronisationszeitpunkte in Frage. Alleine aus der Metrik kann die genaue Position des Synchronisationszeitpunkts jedoch nicht bestimmt werden, da die Metrikwerte identisch sind. Somit ist eine Mehrdeutigkeitsauflösung notwendig.

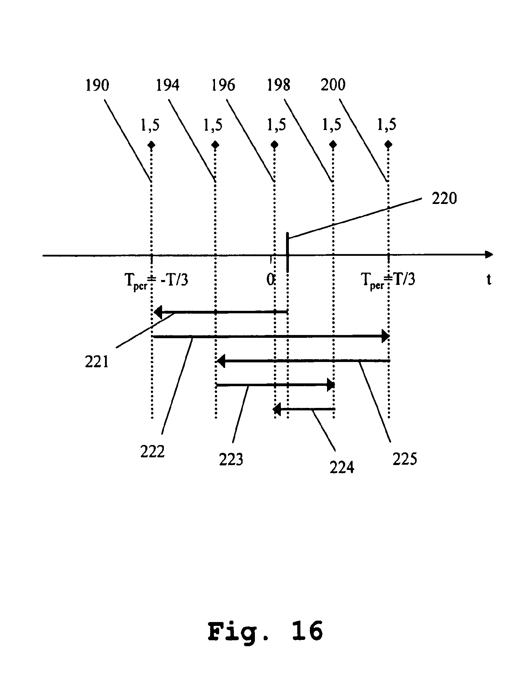

In Fig. 16 wird die Auflösung von Mehrdeutigkeiten anhand des Beispiels aus Fig. 15 dargestellt. Der Punkt 200 auf der Zeitachse gibt den von der Grobschätzung ermittelten groben Schätzwert des korrekten Synchronisationszeitpunkts an. Ausgehend von diesem Zeitpunkt wird das FFT-Fenster, welches zur Dekodierung des Signals eingesetzt wird, nacheinander an jeden der potentiellen Synchronisationszeitpunkte, vorgegeben durch die Schutzintervallpositionen 190, 194, 196, 198, 200 verschoben. Anhand der übertragenen bekannten Pilotsymbole wird an jeder dieser Positionen das Signal-Rausch-Verhältnis ermittelt. Da für die optimale FFT-Fensterposition die Inter-Symbol- und Inter-Carrier-Interferenzen am geringsten sind, wird abschließend diejenige Fensterverschiebung ausgewählt, für die sich der größte Störabstand ergibt, welcher den optimalen Synchronisationszeitpunkt bestimmt.

Zunächst wird der am weitesten von dem Grobschätzwert 220 entfernte potentielle Synchronisationszeitpunkt untersucht. Von diesem ausgehend wird das FFT-Fenster in der Reihenfolge sinkenden Abstands zu dem Grobschätzwert 220 verschoben und das jeweilige Signal-Rausch-Verhältnis ermittelt. Die Wahrscheinlichkeit, dass der potentielle Synchronisationszeitpunkt, welcher dem Grobschätzwert 220 am nächsten liegt, der korrekte Synchronisationszeitpunkt ist, ist höher als die Wahrscheinlichkeit eines jeden anderen potentiellen Synchronisationszeitpunkts. Da nach Bestimmung des korrekten Synchronisationszeitpunkts das FFT-Fenster zu diesem hin verschoben werden muss, um die Dekodierung durchzuführen, kann mit dieser Reihenfolge der Untersuchung die Verarbeitungszeit im Durchschnitt reduziert werden. Im wahrscheinlichsten Fall, dass der korrekte Synchronisationszeitpunkt tatsächlich der dem Grobschätzwert 220 nächste ist, muss das FFT-Fenster nicht erneut verschoben werden.

Die Erfindung ist nicht auf das dargestellte Ausführungsbeispiel beschränkt. Wie bereits erwähnt, können Empfangssignale unterschiedlicher OFDM-basierter Übertragungsverfahren synchronisiert werden. Alle vorstehend beschriebenen Merkmale oder in den Figuren gezeigten Merkmale sind im Rahmen der Erfindung beliebig miteinander kombinierbar.

**Patentansprüche**

1. Verfahren zur Synchronisierung von Empfangssignalen bei orthogonalen Frequenz-Multiplex-Übertragungsverfahren (OFDM),
wobei ein Sendesignal zumindest einen Senderahmen (162, 163) enthält,
wobei ein Senderahmen (162, 163) zumindest ein Schutzintervall (30, 40, 42, 44, 50, 51, 101, 176, 177, 178) enthält,
wobei in zumindest einem Teil der Senderahmen (162, 163) bekannte Pilotsymbole übertragen werden,
wobei das Empfangssignal (60) über einen Übertragungskanal, welcher über eine Kanalimpulsantwort (88) im Zeitbereich und eine Kanalübertragungsfuhktion (86) im Frequenzbereich verfügt, übertragen wird,
wobei die Kanalimpulsantwort (88) des Übertragungskanals mehrere zeitlich versetzte Komponenten enthält und
wobei für jedes Empfangssignal (60) genau ein korrekter Synchronisationszeitpunkt existiert,
wobei jeder mögliche Synchronisationszeitpunkt einer Position des Schutzintervalls (30, 40, 42, 44, 50, 51, 101, 176, 177, 178) gegenüber der Kanalimpulsantwort (88) entspricht,
wobei eine Metrik für sämtliche möglichen Synchronisationszeitpunkte gebildet wird,
wobei der Wert der Metrik von der innerhalb des jeweiligen Schutzintervalls (30, 40, 42, 44, 50, 51, 101, 176, 177, 178) liegenden Leistung (89) der Kanalimpulsantwort (88) abhängig ist,

wobei der korrekte Synchronisationszeitpunkt (68) des Empfangssignals (60) durch Maximierung der Metrik bestimmt wird,
**dadurch gekennzeichnet,**
**dass** die Kanalübertragungsfunktion (86) aus dem Empfangssignal (60) mehrerer übertragener Pilotsymbole ermittelt wird,
**dass** die Kanalimpulsantwort (88) aus der Kanalübertragungsfunktion (86) ermittelt wird,
**dass** die in die Berechnung der Metrik eingehenden Komponenten der Kanalimpulsantwort (88) durch Vergleich der Leistungen der Komponenten der Kanalimpulsantwort (88) mit einem Schwellwert (132) reduziert werden,
**dass** mehrere nebeneinander liegende Leistungen der Komponenten der Kanalimpulsantwort (148, 143, 149, 150, 145, 151, 146), welche den Schwellwert (132) überschreiten, eine Maximumsregion (142, 145, 147) bilden, und dass nur die höchste Leistung der Komponenten der Kanalimpulsantwort (143, 144, 146) in einer Maximumsregion (142, 145, 147) als Maximum der Leistung der Komponenten der Kanalimpulsantwort angesehen wird.

2. Verfahren nach Anspruch 1,
**dadurch gekennzeichnet,**
**dass** vor dem Einsatz des Verfahrens eine Grobsynchronisierung erfolgt, und
**dass** die Grobsynchronisierung einen Grobschätzwert (70) des korrekten Synchronisationszeitpunkts ermittelt.

3. Verfahren nach Anspruch 1 oder 2,
**dadurch gekennzeichnet,**
**dass** das Übertragungsverfahren einem digitalen Rundfunk oder Fernsehstandard, insbesondere DVB-T oder DAB, entspricht.

4. Verfahren nach einem der Ansprüche 1 bis 3,
**dadurch gekennzeichnet,**
**dass** das Empfangssignal (60) zumindest ein ursprüngliches Sendesignal (20, 22, 50, 54) und Echos (21, 52, 53, 55) des ursprünglichen Sendesignals (20, 22, 50, 54) enthält.

5. Verfahren nach einem der Ansprüche 1 bis 4,
**dadurch gekennzeichnet,**
**dass** das Empfangssignal (60) mehrere identische, zeitversetzte ursprüngliche Sendesignale (20, 22, 50, 54) und Echos (21, 52, 53, 55) der mehreren identischen zeitversetzten ursprünglichen Sendesignale (20, 22, 50, 54) enthält.

6. Verfahren nach einem der Ansprüche 1 bis 5,
**dadurch gekennzeichnet,**
**dass** der Schwellwert (132) oberhalb einer unteren Schwellwertgrenze (128) und unterhalb einer oberen Schwellwertgrenze (126) liegt,

**dass** die untere Schwellwertgrenze (128) von dem mittleren Rauschpegel abhängig ist, und

**dass** die obere Schwellwertgrenze (126) von dem Maximum (124) der Leistung der Komponenten der Kanalimpulsantwort (88) abhängig ist.

7. Verfahren nach einem der Ansprüche 1 bis 6,
**dadurch gekennzeichnet,**
**dass** beim Bilden der Metrik über mehrere zeitlich versetzte Kanalimpulsantworten (88) gemittelt wird.

8. Verfahren nach Anspruch 2,
**dadurch gekennzeichnet,**
**dass** eine Unterabtastung der Kanalübertragunsfunktion im Frequenzbereich eine periodische Wiederholung der Kanalimpulsantwort (88) im Zeitbereich bewirkt,
**dass** eine periodische Wiederholung der Kanalimpulsantwort (88) im Zeitbereich mehrere Positionen des Schutzintervalls (190, 194, 196, 198, 200) mit identischer Metrik bewirkt,
**dass** lediglich einer der mehreren Positionen des Schutzintervalls (190, 194, 196, 198, 200) mit identischer Metrik dem korrekten Synchronisationszeitpunkt entspricht, dass jede der mehreren Positionen des Schutzintervalls (190, 194, 196, 198, 200) mit identischer Metrik nacheinander als Hypothese des korrekten Synchronisationszeitpunkts betrachtet wird,
**dass** für jede Hypothese des korrekten Synchronisationszeitpunkts das Signal-Rausch-Verhältnis übertragener bekannter Pilot-Symbole bestimmt wird, und dass der korrekte Synchronisationszeitpunkt durch Maximierung dieses Signal-Rausch-Verhältnisses ermittelt wird.

9. Verfahren nach Anspruch 8,
**dadurch gekennzeichnet,**
**dass** die Kanalübertragungsfunktion um einen bestimmten Faktor unterabgetastet wird, und
**dass** der Faktor das Verhältnis der Anzahl der Senderahmen (162) ohne bekanntes Pilotsymbol zu der Anzahl der Senderahmen (163) mit bekanntem Pilotsymbol ist.

10. Verfahren nach Anspruch 8 oder 9,
**dadurch gekennzeichnet,**
**dass** die den mehreren Hypothesen des korrekten Synchronisationszeitpunkts zugeordneten Signal-Rausch-Verhältnisse nacheinander bestimmt werden,
**dass** zuerst das der Hypothese größten zeitlichen Abstands von dem Grobschätzwert (70) des korrekten Synchronisationszeitpunkts zugeordnete Signal-Rausch-Verhältnis ermittelt wird, und
**dass** die den Hypothesen zugeordneten Signal-Rausch-Verhältnisse in der Reihenfolge sinkenden Abstands von dem Grobschätzwert (70) des korrekten Synchronisationszeitpunkts ermittelt werden.

11. Vorrichtung zur Synchronisierung von Empfangssignalen (60) bei orthogonalen Frequenz-Multiplex-Übertragungsverfahren, mit einer Kanalübertragungsfunktions-Bestimmungs-Einrichtung (62), einer Kanalimpulsantwort-Bestimmungs-Einrichtung (63), einer Metrik-Bestimmungs-Einrichtung (65) und einer Metrik-Maximierungs-Einrichtung (66),
wobei ein Sendesignal zumindest einen Senderahmen (162, 163) enthält,
wobei jeder Senderahmen (162, 163) zumindest ein Schutzintervall (30, 40, 42, 44, 50, 51, 101, 176, 177, 178) enthält,
wobei in zumindest einem Teil der Senderahmen (162, 163) bekannte Pilotsymbole übertragen werden,
wobei das Empfangssignal (60) über einen Übertragungskanal, welcher über eine Kanalimpulsantwort (88) im Zeitbereich und eine Kanalübertragungsfunktion (86) im Frequenzbereich verfügt, übertragen wird,
wobei die Kanalimpulsantwort (88) des Übertragungskanals mehrere zeitlich versetzte Komponenten enthält und
wobei für jedes Empfangssignal (60) genau ein korrekter Synchronisationszeitpunkt existiert,
wobei jeder mögliche Synchronisationszeitpunkt einer Position des Schutzintervalls (30, 40, 42, 44, 50, 51, 101, 176, 177, 178) gegenüber der Kanalimpulsantwort (88) entspricht,
wobei die Metrik-Bestimmungs-Einrichtung (65) eine Metrik für sämtliche möglichen Synchronisationszeitpunkte bildet, wobei der Wert der Metrik von der innerhalb des jeweiligen Schutzintervalls (30, 40, 42, 44, 50, 51, 101, 176, 177, 178) liegenden Leistung (89) der Kanalimpulsantwort (88) abhängig ist,
wobei die Metrik-Maximierungs-Einrichtung (66) den korrekten Synchronisationszeitpunkt (68) des Empfangssignals (60) durch Maximierung der Metrik bestimmt,
**dadurch gekennzeichnet,**
**dass** die Kanalübertragungsfunktions-Bestimmungs-Einrichtung (62) die Kanalübertragungsfunktion (86) aus dem Empfangssignal (60) mehrerer übertragener Pilotsymbole ermittelt,
**dass** die Kanalimpulsantwort-Bestimmungs-Einrichtung (64) die Kanalimpulsantwort (88) aus der Kanalübertragungsfunktion (86) ermittelt,
**dass** eine Schwellwert-Bildungs-Einrichtung (64) die Anzahl der in die Berechnung der Metrik eingehenden Komponenten der Kanalimpulsantwort (88) durch Vergleich der Leistungen der Komponenten der Kanalimpulsantwort (88) mit einem Schwellwert (132) reduziert,
**dass** mehrere nebeneinander Leistungen der Kanalimpulsantwort (148, 143, 149, 150, 145, 151, 146), welche den Schwellwert (132) überschreiten, eine Maximumsregion (142, 145, 147) bilden, und **dass** die Schwellwert-Bildungs-Einrichtung (64) nur den höchsten Wert der Leistung der Kanalimpulsantwort (143, 144, 146) in einer Maximumsregion (142, 145, 147) als Maximum der Leistung der Kanälimpulsantwort betrachtet.

12. Vorrichtung nach Anspruch 11, **dadurch gekennzeichnet,** **dass** eine Grobsynchronisierungs-Einrichtung (61), welche einen Grobschätzwert (70) des korrekten Synchronisationszeitpunkts ermittelt, der Kanalübertragungsfunktions- Bestimmungs- Einrichtung (62) vorgeschaltet ist.

13. Vorrichtung nach Anspruch 11 oder 12, **dadurch gekennzeichnet,** **dass** das Übertragungsverfahren einem digitalen Rundfunk oder Fernsehstandard, insbesondere DVB-T oder DAB, entspricht.

14. Vorrichtung nach einem der Ansprüche 11 bis 13, **dadurch gekennzeichnet,** **dass** das Empfangssignal (60) zumindest ein ursprüngliches Sendesignal (20, 22, 50, 54) und Echos (21, 52, 53, 55) des ursprünglichen Sendesignals (20, 22, 50, 54) enthält.

15. Vorrichtung nach einem der Ansprüche 11 bis 14, **dadurch gekennzeichnet,** **dass** das Empfangssignal (60) mehrere identische, zeitversetzte ursprüngliche Sendesignale (20, 22, 50, 54) und Echos (21, 52, 53, 55) der mehreren identischen zeitversetzter Sendesignale (20, 22, 50, 54) enthält.

16. Vorrichtung nach einem der Ansprüche 11 bis 15, **dadurch gekennzeichnet,** **dass** die Metrik-Maximierungs-Einrichtung (66) die Maxima der Metrik durch Maximumssuche über alle Metrikwerte bestimmt.

17. Vorrichtung nach einem der Ansprüche 11 bis 16, **dadurch gekennzeichnet,** **dass** der Schwellwert (132) oberhalb einer unteren Schwellwertgrenze (128) und unterhalb einer oberen Schwellwertgrenze (126) liegt, **dass** die untere Schwellwertgrenze (128) von dem mittleren Rauschpegel abhängig ist, und **dass** die obere Schwellwertgrenze (126) von dem Maximum der Leistungen der Kanalimpulsantwort (124) abhängig ist.

18. Vorrichtung nach einem der Ansprüche 11 bis 17, **dadurch gekennzeichnet,** **dass** die Metrik-Bestimmungs-Einrichtung (65) während der Bildung der Metrik über mehrere zeitlich versetzte Kanalimpulsantworten (88) mittelt.

19. Vorrichtung nach einem der Ansprüche 11 bis 18, **dadurch gekennzeichnet,** **dass** eine Unterabtastung der Kanalübertragunsfunktion im Frequenzbereich eine periodische Wiederholung der Kanalimpulsantwort (88) im Zeitbereich bewirkt, **dass** eine periodische Wiederholung der Kanalimpulsantwort (88) im Zeitbereich mehrere Positionen des Schutzintervalls (190, 194, 196, 198, 200) mit identischer Metrik bewirkt, **dass** lediglich einer der mehreren Positionen des Schutzintervalls (190, 194, 196, 198, 200) mit identischer Metrik dem korrekten Synchronisationszeitpunkt entspricht, dass nach der Metrik-Maximierungs-Einrichtung (66) eine Mehrdeutigkeits-Auflösungs-Einrichtung (67) angeordnet ist, **dass** die Mehrdeutigkeits-Auflösungs-Einrichtung (67) jeder der mehreren Positionen des Schutzintervalls (190, 194, 196, 198, 200) mit identischer Metrik nacheinander als Hypothese des korrekten Synchronisationszeitpunkts auswertet, **dass** die Mehrdeutigkeits-Auflösungs-Einrichtung (67) für jede Hypothese des korrekten Synchronisationszeitpunkts das Signal-Rausch-Verhältnis übertragener bekannter Pilot-Symbole bestimmt, und **dass** die Mehrdeutigkeits-Auflösungs-Einrichtung (67) den korrekten Synchronisationszeitpunkt durch Maximierung dieses Signal-Rausch-Verhältnisses ermittelt.

20. Vorrichtung nach Anspruch 19, **dadurch gekennzeichnet,** **dass** die Kanalübertragungsfunktion (86) um einen bestimmten Faktor unterabgetastet ist, und **dass** der Faktor das Verhältnis der Anzahl der Senderahmen (162) ohne bekanntes Pilotsymbol zu der Anzahl der Senderahmen (163) mit bekanntem Pilotsymbol ist.

21. Vorrichtung nach Anspruch 19 oder 20, **dadurch gekennzeichnet,** **dass** die Mehrdeutigkeits-Auflösungs-Einrichtung (67) die den mehreren Hypothesen des korrekten Synchronisationszeitpunkts zugeordneten Signal-Rausch-Verhältnisse nacheinander bestimmt, **dass** die Mehrdeutigkeits-Auflösungs-Einrichtung (67) zuerst das der Hypothese größten zeitlichen Abstands von dem Grobschätzwert (70) des korrekten Synchronisationszeitpunkts zugeordnete Signal-Rausch-Verhältnis ermittelt, und **dass** die Mehrdeutigkeits-Auflösungs-Einrichtung (67) die den Hypothesen zugeordneten Signal-Rausch-Verhältnisse in der Reihenfolge sinkenden Abstands von dem Grobschätzwert (70) des korrekten Synchronisationszeitpunkts ermittelt.

## Claims

1. A method for synchronising reception signals with orthogonal-frequency-multiplex transmission methods (OFDM),

   wherein a transmission signal contains at least one transmission frame (162, 163),

   wherein a transmission frame (162, 163) contains at least one guard interval (30, 40, 42, 44, 50, 51, 101, 176, 177, 178),

   wherein known pilot symbols are transmitted in at least one part of the transmission frame (162, 163),

   wherein the reception signal (60) is transmitted via a transmission channel, which comprises a channel-impulse response (88) in the time domain and a channel-transmission function (86) in the frequency domain,

   wherein the channel-impulse response (88) of the transmission channel contains several time-offset components and wherein exactly one correct synchronisation time exists for each reception channel (60),

   wherein each possible synchronisation time corresponds to one position of the guard interval (30, 40, 42, 44, 50, 51, 101, 176, 177, 178) relative to the channel-impulse response (88), wherein a metric is formed for all possible synchronisation times,

   wherein the value of the metric is dependent on the power (89) of the channel-impulse response (88) disposed within the respective guard interval (30, 40, 42, 44, 50, 51, 101, 176, 177, 178), wherein the correct synchronisation time (68) of the reception signal (60) is determined by maximising the metric,

   **characterised in that**

   the channel-transmission function (86) is determined from the reception signal (60) of several transmitted pilot symbols,

   that the channel-impulse response (88) is determined from the channel-transmission function (86),

   that the components of the channel-impulse response (88) going into the calculation of the metric are reduced by comparison of the powers of the components of the channel-impulse response (88) with a threshold value (132),

   that several powers disposed adjacent to one another of the components of the channel-impulse response (148, 143, 149, 150, 145, 151, 146) which exceed the threshold value (132), form a maximum region (142, 145, 147),

   and that only the highest power of the components of the channel-impulse response (143, 144, 146) in a maximum region (142, 145, 147) is regarded as the maximum of the power of the components of the channel-impulse response.

2. The method according to claim 1,
   **characterised in that**
   a coarse synchronisation is implemented before the use of the method, and
   that the coarse synchronisation determines a coarse estimated value (70) of the correct synchronisation time.

3. The method according to claim 1 or 2,
   **characterised in that**
   the transmission method corresponds to a digital radio or television standard, especially DVB-T or DAB.

4. The method according to any one of claims 1 to 3,
   **characterised in that**
   the reception signal (60) contains at least one original transmission signal (20, 22, 50, 54) and echoes (21, 52, 53, 55) of the original transmission signal (20, 22, 50, 54).

5. The method according to any one of claims 1 to 4,
   **characterised in that**
   the reception signal (60) contains several identical, time-offset, original transmission signals (20, 22, 50, 54) and echoes (21, 52, 53, 55) of the several identical, time-offset, original transmission signals (20, 22, 50, 54).

6. The method according to any one of claims 1 to 5,
   **characterised in that**
   the threshold value (132) is disposed above a lower threshold-value limit (128) and below an upper threshold-value limit (126),
   that the lower threshold-value limit (128) is dependent upon the average noise level, and
   that the upper threshold-value limit (126) is dependent upon the maximum (124) of the power of the components of the channel-impulse response (88).

7. The method according to any one of claims 1 to 6,
   **characterised in that**,
   in forming the metric, an average of several time-offset channel-impulse responses (88) is formed.

8. The method according to claim 2,
   **characterised in that**
   a sub-sampling of the channel-transmission function in the frequency domain causes a periodic repetition of the channel-impulse response (88) in the time domain,
   that a periodic repetition of the channel-impulse response (88) in the time domain causes several positions of the guard interval (190, 194, 196, 198, 200) with an identical metric,
   that only one of the several positions of the guard interval (190, 194, 196, 198, 200) with identical metric corresponds to the correct synchronisation time,
   that each of the several positions of the guard interval (190, 194, 196, 198, 200) with identical metric is regarded in succession as a hypothesis for the correct synchronisation time,

that the signal-noise ratio of transmitted, known pilot symbols is determined for every hypothesis of the correct synchronisation time, and
that the correct synchronisation time is determined by maximising this signal-noise ratio.

9. The method according to claim 8,
**characterised in that**
the channel-transmission function is sub-sampled by a given factor, and
that the factor is the ratio of the number of transmission frames (162) without known pilot symbol to the number of transmission frames (163) with known pilot symbol.

10. The method according to claim 8 or 9,
**characterised in that**
the signal-noise ratios associated with the several hypotheses for the correct synchronisation time are determined in succession,
that initially, the signal-noise ratio associated with the hypothesis with the largest time difference from the coarse estimated value (70) of the correct synchronisation time is determined, and that the signal-noise ratios associated with the hypotheses are determined in the sequence of declining difference from the coarse estimated value (70) of the correct synchronisation time.

11. A device for synchronising reception signals (60) with orthogonal-frequency-multiplex transmission methods, with a channel-transmission-function-determining device (62), a channel-impulse response-determining-device (63), and metric-determining device (65) and a metric-maximising device (66),
wherein a transmission signal contains at least one transmission frame (162, 163),
wherein every transmission frame (162, 163) contains at least one guard interval (30, 40, 42, 44, 50, 51, 101, 176, 177, 178),
wherein known pilot symbols are transmitted in at least one part of the transmission frame (162, 163),
wherein the reception signal (60) is transmitted via a transmission channel, which provides a channel-impulse response (88) in the time domain and a channel-transmission function (86) in the frequency domain,
wherein the channel-impulse response (88) of the transmission channel contains several time-offset components, and
wherein exactly one correct synchronisation time exists for every reception channel (60),
wherein every possible synchronisation time corresponds to a position of the guard interval (30, 40, 42, 44, 50, 51, 101, 176, 177, 178) relative to the channel-impulse response (88), wherein the metric-determining device (65) forms a metric for all possible synchronisation times, wherein the value of the metric is dependent upon the power (89) of the channel-impulse response (88) disposed within the respective guard interval (30, 40, 42, 44, 50, 51, 101, 176, 177, 178),
wherein the metric-maximising device (66) determines the correct synchronisation time (68) of the reception signal (60) by maximising the metric, **characterised in that**
the channel-transmission-function-determining device (62) determines the channel-transmission function (86) from the reception signal (60) of several transmitted pilot symbols,
that the channel-impulse-response-determining device (64) determines the channel-impulse response (88) from the channel-transmission function (86),
that a threshold-value-forming device (64) reduces the number of components of the channel-impulse response (88) going into the calculation of the metric by comparison of the powers of the components of the channel-impulse response (88) with a threshold value (132),
that several adjacent powers of the channel-impulse response (148, 143, 149, 150, 145, 151, 146) which exceed the threshold value (132), form a maximum region (142, 145, 147), and
that the threshold-value-forming device (64) regards only the highest value of the power of the channel-impulse response (143, 144, 146) within a maximum region (142, 145, 47) as the maximum of the power of the channel-impulse response.

12. The device according to claim 11,
**characterised in that**
a coarse synchronisation device (61) which determines a coarse estimated value (70) of the correct synchronisation time, is connected upstream of the channel-transmission-function determining device (62).

13. The device according to claim 11 or 12,
**characterised in that**
the transmission method corresponds to a digital radio or television standard, especially DVB-T or DAB.

14. The device according to any one of claims 11 to 13,
**characterised in that**
the reception signal (60) contains at least one original transmission signal (20, 22, 50, 54) and echoes (21, 52, 53, 55) of the original transmission signal (20, 22, 50, 54).

15. The device according to any one of claims 11 to 14,
**characterised in that**
the reception signal (60) contains several identical, time-offset, original transmission signals (20, 22, 50, 54) and echoes (21, 52, 53, 55) of the several identical, time-offset, transmission signals (20, 22, 50, 54).

**16.** The device according to any one of claims 11 to 15, **characterised in that** the metric-maximising device (66) determines the maxima of the metric through a maximum search of all metric values.

**17.** The device according to any one of claims 11 to 16, **characterised in that** the threshold value (132) is disposed above a lower threshold-value limit (128) and below an upper threshold-value limit (126), that the lower threshold-value limit (128) is dependent upon the average noise level, and that the upper threshold-value limit (126) is dependent upon the maximum of the powers of the channel-impulse response (124).

**18.** The device according to any one of claims 11 to 17, **characterised in that**, in forming the metric, the metric-determining device (65) forms an average of several time-offset channel-impulse responses (88).

**19.** The device according to any one of claims 11 to 18, **characterised in that** a sub-sampling of the channel-transmission function in the frequency domain causes a periodic repetition of the channel-impulse response (88) in the time domain, that a periodic repetition of the channel-impulse response (88) in the time domain causes several positions of the guard interval (190, 194, 196, 198, 200) with an identical metric, that only one of the several positions of the guard interval (190, 194, 196, 198, 200) with an identical metric corresponds to the correct synchronisation time, that an ambiguity-resolving device (67) is arranged after the metric-maximising device (66), that the ambiguity-resolving device (67) evaluates every one of the several positions of the guard interval (190, 194, 196, 198, 200) with an identical metric in succession as a hypothesis for the correct synchronisation time, that, for every hypothesis of the correct synchronisation time, the ambiguity-resolving device (67) determines the signal-noise ratio of transmitted, known pilot symbols, and that the ambiguity-resolving device (67) determines the correct synchronisation time by maximising this signal-noise ratio.

**20.** The device according to claim 19, **characterised in that** the channel-transmission function (86) is sub-sampled by a given factor, and that the factor is the ratio of the number of transmission frames (162) without known pilot symbol to the number of transmission frames (163) with known pilot symbol.

**21.** The device according to claim 19 or 20, **characterised in that** the ambiguity-resolving device (67) determines the signal-noise ratios associated with the several hypotheses for the correct synchronisation time in succession, that the ambiguity-resolving device (67) initially determines the signal-noise ratio associated with the hypothesis with the greatest time difference from the coarse estimated value (70) of the correct synchronisation time, and that the ambiguity-resolving device (67) determines the signal-noise ratios associated with the hypotheses in the sequence of declining difference from the coarse estimated value (70) of the correct synchronisation time.

**Revendications**

**1.** Procédé en vue de la synchronisation de signaux de réception dans le cas d'un procédé de transmission par multiplexage fréquentiel orthogonal (OFDM), dans lequel un signal d'émission comporte au moins une trame d'émission (162, 163), dans lequel une trame d'émission (162, 163) comportant au moins un intervalle de protection (30, 40, 42, 44, 50, 51, 101, 176, 177, 178), dans lequel des symboles pilotes connus sont transmis dans au moins une partie de la trame d'émission (162, 163), dans lequel le signal de réception (60) est transmis par l'intermédiaire d'un canal de transmission, qui dispose d'une réponse d'impulsion de canal (88) dans le domaine temporel et d'une fonction de transmission de canal (86) dans le domaine fréquentiel, dans lequel la réponse d'impulsion de canal (88) du canal de transmission comporte plusieurs composantes temporellement décalées et dans lequel un moment de synchronisation correct existe précisément pour chaque signal de réception (60), dans lequel chaque moment de synchronisation possible correspond à une position de l'intervalle de protection (30, 40, 42, 44, 50, 51, 101, 176, 177, 178) par rapport à la réponse d'impulsion de canal (88), dans lequel une métrique est formée pour l'ensemble des moments de synchronisation possibles, dans lequel la valeur de la métrique dépend de la capacité (89) de la réponse d'impulsion de canal (88) se trouvant à l'intérieur de l'intervalle de protection respectif (30, 40, 42, 44, 50, 51, 101, 176, 177, 178), dans lequel le moment de synchronisation correct (68) du signal de réception (60) est déterminé par la maximisation de la métrique,

**caractérisé en ce que**
la fonction de transmission de canal (86) est déterminée à partir du signal de réception (60) de plusieurs symboles pilotes transmis,

**en ce que** la réponse d'impulsion de canal (88) est déterminée à partir de la fonction de transmission de canal (86),

**en ce que** les composantes de la réponse d'impulsion de canal (88) entrant dans le calcul de la métrique sont réduites avec une valeur de seuil (132) par comparaison des capacités des composantes de la réponse d'impulsion de canal (88),

**en ce que** plusieurs capacités adjacentes des composantes de la réponse d'impulsion de canal (148, 143, 149, 150, 145, 151, 146), qui dépassent la valeur de seuil (132), forment une région de maximum (142, 145, 147),

et **en ce que** seule la capacité la plus élevée des composantes de la réponse d'impulsion de canal (143, 144, 146) est considérée dans une région de maximum (142, 145, 147) comme maximum de la capacité des composantes de la réponse d'impulsion de canal.

2. Procédé selon la revendication 1, **caractérisé en ce que**
une synchronisation grossière est effectuée avant l'utilisation du procédé, et
**en ce que** la synchronisation grossière détermine une valeur d'estimation grossière (70) du moment de synchronisation correct.

3. Procédé selon la revendication 1 ou 2, **caractérisé en ce que**
le procédé de transmission correspond à un standard de radio ou de télévision numérique, en particulier DVB-T ou DAB.

4. Procédé selon l'une des revendications 1 à 3, **caractérisé en ce que**
le signal de réception (60) comporte au moins un signal d'envoi original (20, 22, 50, 54) et des échos (21, 52, 53, 55) du signal d'envoi original (20, 22, 50, 54).

5. Procédé selon l'une des revendications 1 à 4, **caractérisé en ce que**
le signal de réception (60) comporte plusieurs signaux d'envois originaux décalés dans le temps identiques (20, 22, 50, 54) et des échos (21, 52, 53, 55) de plusieurs signaux d'envois originaux décalés dans le temps identiques (20, 22, 50, 54).

6. Procédé selon l'une des revendications 1 à 5, **caractérisé en ce que**
la valeur de seuil (132) se trouve au-dessus d'une limite de seuil inférieure (128) et au-dessous d'une limite de seuil supérieure (126),

**en ce que** la limite de seuil inférieure (128) dépend du niveau de bruit moyen, et
**en ce que** la limite de seuil supérieure (126) dépend du maximum (124) de la capacité des composantes de la réponse d'impulsion de canal (88).

7. Procédé selon l'une des revendications 1 à 6, **caractérisé en ce que**
on effectue une moyenne sur plusieurs réponses d'impulsion de canal décalées dans le temps (88) lors de la formation de la métrique.

8. Procédé selon la revendication 2, **caractérisé en ce que**
un sous-échantillonnage de la fonction de transmission de canal dans le domaine fréquentiel provoque une répétition périodique de la réponse de canal (88) dans le domaine temporel,

**en ce qu'**une répétition périodique de la réponse d'impulsion de canal (88) dans le domaine temporel provoque plusieurs positions de l'intervalle de protection (190, 194, 196, 198, 200) avec une métrique identique,

**en ce que** seulement l'une parmi la pluralité de positions de l'intervalle de protection (190, 194, 196, 198, 200) correspond au moment de synchronisation correct avec une métrique identique,

**en ce que** chacune de la pluralité de positions de l'intervalle de protection (190, 194, 196, 198, 200) est considérée l'une après l'autre comme hypothèse du moment de synchronisation correct avec une métrique identique,

**en ce que** l'on détermine le rapport signal-bruit des symboles pilotes connus transmis pour chaque hypothèse du moment de synchronisation correct, et
**en ce que** le moment de synchronisation correct est déterminé par la maximisation de ce rapport signal-bruit.

9. Procédé selon la revendication 8, **caractérisé en ce que**
la fonction de transmission de canal est sous-échantillonné par un facteur déterminé, et
**en ce que** le facteur est le rapport du nombre de trames d'envoi (162) sans symbole pilote connu par rapport au nombre de trames d'envoi (163) comportant un symbole pilote connu.

10. Procédé selon la revendication 8 ou 9, **caractérisé en ce que**
on détermine l'un après l'autre les rapports signal-bruit associés à la pluralité d'hypothèses du moment de synchronisation correct,

**en ce que** d'abord le rapport signal-bruit associé à l'hypothèse d'une très grande distance temporelle est déterminé par la valeur d'estimation grossière (70) du moment de synchronisation correct, et
**en ce que** les rapports signal-bruit associés aux hypothèses selon une distance se réduisant sont déterminés par la valeur d'estimation grossière (70) du moment de synchronisation correct.

11. Dispositif en vue de la synchronisation de signaux de réception (60) dans le cas d'un procédé de transmission par multiplexage fréquentiel orthogonal, comportant un dispositif de détermination de fonction de transmission de canal (62), un dispositif de détermination de réponse d'impulsion de canal (63), un dispositif de détermination de métrique (65) et un dispositif de maximisation de métrique (66),
dans lequel un signal d'envoi comporte au moins une trame d'émission (162, 163),
dans lequel chaque trame d'émission (162, 163) comporte au moins un intervalle de protection (30, 40, 42, 44, 50, 51, 101, 176, 177, 178),
dans lequel des symboles pilotes connus sont transmis dans au moins une partie de la trame d'émission (162, 163),
dans lequel le signal de réception (60) est transmis par l'intermédiaire d'un canal de transmission, qui dispose d'une réponse d'impulsion de canal (88) dans le domaine temporel et d'une fonction de transmission de canal (86) dans le domaine fréquentiel,
dans lequel la réponse d'impulsion de canal (88) du canal de transmission comporte plusieurs composantes décalées dans le temps et
dans lequel un moment de synchronisation correct existe précisément pour chaque signal de réception (60),
dans lequel chaque moment de synchronisation possible correspond à une position de l'intervalle de protection (30, 40, 42, 44, 50, 51, 101, 176, 177, 178) par rapport à la réponse d'impulsion de canal (88),
dans lequel le dispositif de détermination de métrique (65) forme une métrique pour l'ensemble des moments de synchronisation possibles,
dans lequel la valeur de la métrique dépend de la capacité (89) de la réponse d'impulsion de canal (88) se trouvant à l'intérieur de l'intervalle de protection respectif (30, 40, 42, 44, 50, 51, 101, 176, 177, 178),
dans lequel le dispositif de maximisation de métrique (66) détermine le moment de synchronisation correct (68) du signal de réception (60) grâce à la maximisation de la métrique,
**caractérisé en ce que**
le dispositif de détermination de fonction de transmission de canal (62) détermine la fonction de transmission de canal (86) à partir du signal de réception (60) de plusieurs symboles pilotes transmis,
**en ce que** le dispositif de détermination de réponse d'impulsion de canal (64) détermine la réponse d'impulsion de canal (88) à partir de la fonction de transmission de canal (86),
**en ce qu'**un dispositif de formation de valeur de seuil (64) réduit avec une valeur de seuil (132) le nombre des composantes de la réponse d'impulsion de canal (88) entrant dans le calcul de métrique par comparaison des capacités des composantes de la réponse d'impulsion de canal (88),
**en ce que** plusieurs capacités adjacentes de la réponse d'impulsion de canal (148, 143, 149, 150, 145, 151, 146), qui dépassent la valeur de seuil (132), forment une région de maximum (142, 145, 147), et
**en ce que** le dispositif de formation de valeur de seuil (64) considère uniquement la valeur la plus élevée de la capacité de la réponse d'impulsion de canal (143, 144, 146) dans une région de maximum (142, 145, 147) en tant que maximum de la capacité de la réponse d'impulsion de canal.

12. Dispositif selon la revendication 11, **caractérisé en ce que**
un dispositif de synchronisation grossière (61), qui détermine une valeur d'estimation grossière (70) du moment de synchronisation correct, est placé en amont du dispositif de détermination de fonction de transmission de canal (62).

13. Dispositif selon la revendication 11 ou 12, **caractérisé en ce que**
le procédé de transmission correspond à un standard de radio ou de télévision numérique, en particulier DVB-T ou DAB.

14. Dispositif selon l'une des revendications 11 à 13, **caractérisé en ce que**
le signal de réception (60) correspond au moins à un signal d'envoi original (20, 22, 50, 54) et aux échos (21, 50, 53, 55) du signal d'envoi original (20, 22, 50, 54).

15. Dispositif selon l'une des revendications 11 à 14, **caractérisé en ce que**
le signal de réception (60) comporte plusieurs signaux d'envoi originaux décalés dans le temps identiques (20, 22, 50, 54) et des échos (21, 52, 53, 55) de plusieurs signaux d'envoi décalés dans le temps identiques (20, 22, 50, 54).

16. Dispositif selon l'une des revendications 11 à 15, **caractérisé en ce que**
le dispositif de maximisation de métrique (66) détermine les maxima de la métrique grâce à la recherche de maximum parmi toutes les valeurs de métrique.

17. Dispositif selon l'une des revendications 11 à 16, **caractérisé en ce que**
la valeur de seuil (132) se trouve au-dessus d'une limite de seuil inférieure (128) et au-dessous d'une limite de seuil supérieure (126),
**en ce que** la limite de seuil inférieure (128) dépend du niveau de bruit moyen, et
**en ce que** la limite de seuil supérieure (126) dépend du maximum des capacités de la réponse d'impulsion de canal (124).

**18.** Dispositif selon l'une des revendications 11 à 17, **caractérisé en ce que**
le dispositif de détermination de métrique (65) effectue une moyenne pendant la formation de la métrique sur plusieurs réponses d'impulsion de canal décalées dans le temps (88).

**19.** Dispositif selon l'une des revendications 11 à 18, **caractérisé en ce que**
un sous-échantillonnage de la fonction de transmission de canal dans le domaine fréquentiel provoque une répétition périodique de la réponse d'impulsion de canal (88) dans le domaine temporel,
**en ce qu'**une répétition périodique de la réponse d'impulsion de canal (88) dans le domaine temporel provoque plusieurs positions de l'intervalle de protection (190, que 194, 196, 198, 200) avec une métrique identique,
**en ce que** seulement l'une de la pluralité de positions de l'intervalle de protection (190, 194, 196, 198, 200) correspond au moment de synchronisation correct avec une métrique identique,
**en ce qu'**un dispositif de levée d'ambiguïté (67) est disposé après le dispositif de maximisation de métrique (66),
**en ce que** le dispositif de levée d'ambiguïté (67) évalue chacune de la pluralité de positions de l'intervalle de protection (190, 194, 196, 198, 200) l'une après l'autre en tant qu'hypothèse du moment de synchronisation correct avec une métrique identique,
**en ce que** le dispositif de levée d'ambiguïté (67) détermine pour chaque hypothèse du moment de synchronisation correct le rapport signal-bruit des symboles pilotes connus transmis, et
le dispositif de levée d'ambiguïté (67) détermine le moment de synchronisation correct par maximisation de ce rapport signal-bruit.

**20.** Dispositif selon la revendication 19, **caractérisé en ce que**
la fonction de transmission de canal (86) est sous-échantillonnée par un facteur déterminé, et
le facteur est le rapport du nombre de trames d'envoi (162) sans symbole pilote connu par rapport au nombre de trames d'envoi (163) avec un symbole pilote connu.

**21.** Dispositif selon la revendication 19 ou 20, **caractérisé en ce que**
le dispositif de levée d'ambiguïté (67) détermine l'un après l'autre les rapports signal-bruit associés à la pluralité d'hypothèses du moment de synchronisation correct,
**en ce que** le dispositif de levée d'ambiguïté (67) détermine d'abord le rapport signal-bruit associé à l'hypothèse de la plus grande distance temporelle par la valeur d'estimation grossière (70) du moment de synchronisation correct, et
**en ce que** le dispositif de levée d'ambiguïté (67) détermine les rapports signal-bruit associés aux hypothèses selon d'une distance se réduisant par la valeur d'estimation grossière (70) du moment de synchronisation correct.

Fig. 1

Fig. 2

Fig. 3

Fig. 4

EP 2 206 305 B1

Fig. 5

EP 2 206 305 B1

Fig. 6

Fig. 7

Fig. 8

EP 2 206 305 B1

Fig. 9

EP 2 206 305 B1

EP 2 206 305 B1

**Fig. 10**

Fig. 11

EP 2 206 305 B1

**Fig. 12**

**Fig. 13**

EP 2 206 305 B1

**Fig. 14**

194  195  197  198

1,0  0,5  1,0  0,5

193  1,5  1,5  1,5  1,5  1,5  1,5  199

171  1,0  1,0  1,0  200

170  0,5  0,5  0,5  175

190  174

$T_{per} = -T/3$  0  $T_{per} = T/3$  t

172  173

**Fig. 15**

190  194  196  198  200

1,5  1,5  1,5  1,5  1,5

1,0  1,0  1,0

0,5  0,5  0,5

$T_{per} = -T/3$  0  $T_{per} = T/3$  t

Fig. 16

EP 2 206 305 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2390517 A
- EP 1424821 A2